# EUROPEAN PATENT APPLICATION

(11) **EP 4 678 883 A1**
(43) Date of publication of application: **14.01.2026**
(21) Application number: 24187086.4
(22) Date of filing: 08.07.2024
(51) Int. Cl.: F01N 13/18, B60K 13/04

(54) **MOUNTING BRACKET ASSEMBLY FOR AFTERTREATMENT SYSTEM**

(71) Applicant: Cummins Emission Solutions, Inc., Columbus, IN 47201 (US)
(72) Inventor: KADAM, Kiran Ashok, 416410 MIRAJ (IN); DESHMUKH, Kishor Pandurang, 411036 Pune (IN); MULAY, Vrushali Vivek, 416502 Gadhinglaj (IN)
(74) Representative: Hoffmann Eitle

(57) **Abstract**

A mounting bracket assembly for an aftertreatment system includes an outer bracket. The outer bracket includes a mounting plate. The outer bracket includes a first mounting post and a second mounting post located at a first location and a second location of the mounting plate, extending in a first direction and a second direction, respectively. The first direction is parallel to the second direction. The outer bracket includes a brace having a first portion extending from a surface of the mounting plate and a second portion extending from an edge of the first portion. A receptacle is defined by a planar surface of the first portion and a curved surface of the second portion. In a cross-section extending through the receptacle and the mounting plate, the planar surface and the curved surface are at an angle between 35° and 85°, inclusive, with respect to each other.

## Description

### TECHNICAL FIELD

The present application relates generally to a mounting bracket assembly for aftertreatment systems of internal combustion engine systems.

### BACKGROUND

Components of an aftertreatment system may be mounted to a vehicle chassis via brackets. The brackets may be configured in a way to distribute a load of the aftertreatment system and adjust to manufacturing constraints.

### SUMMARY

In one embodiment, a mounting bracket assembly for an aftertreatment system includes an outer bracket. The outer bracket includes a mounting plate, a first mounting post, a second mounting post, and a brace. The first mounting post is located at a first location of the mounting plate and has a first post first aperture extending in a first direction. The second mounting post is located at a second location of the mounting plate and has a second post first aperture extending in a second direction that is parallel to the first direction. The brace includes a first portion extending from a surface of the mounting plate and a second portion extending from an edge of the first portion. A receptacle is defined by a planar surface of the first portion and a curved surface of the second portion. A cross-section extending through the receptacle and the mounting plate, the planar surface and the curved surface are at an angle between 35° and 85°, inclusive, with respect to each other.

In some implementations, the mounting bracket assembly includes a first inner bracket. The first inner bracket includes a first flange. The first flange includes a first flange surface in confronting relation with a mounting plate surface and disposed along a first plane. The first flange also includes a first flange protrusion extending from the first flange. The first flange protrusion includes a first flange protrusion first surface in confronting relation with the planar surface of the first portion and disposed along a second plane. The first flange protrusion includes a first flange protrusion second surface in confronting relation with the curved surface of the second portion and disposed along a third plane. The inner bracket is at least partially disposed between the first mounting post and the second mounting post.

In some implementations, the mounting bracket assembly also includes a clamping plate coupled to the first inner bracket, a first mounting bracket body mount extending from the first inner bracket and coupled to the first inner bracket by a connector, and a fastener coupled to the clamping plate and the outer bracket. In some implementations, the first flange has a first flange segment and a second flange segment, and the first flange segment and the second flange segment are separated by the connector.

In some implementations, the mounting bracket assembly also includes a second mounting bracket body mount which extends from a second inner bracket and is coupled to the outer bracket. The second inner bracket includes a second flange, the second flange includes a second flange surface in confronting relation with the mounting plate surface and is disposed along the first plane. The second inner bracket includes a second flange protrusion extending from the second flange. The second flange protrusion includes a second flange protrusion first surface in confronting relation with a second planar surface of the first portion and disposed along the second plane. The second flange protrusion includes a second flange protrusion second surface in confronting relation with a second curved surface of the second portion and disposed along the third plane.

In some implementations, the mounting bracket assembly also includes a third mounting post located at a third location of the mounting plate and having a third post first aperture extending in a third direction that is parallel to the first direction. The second inner bracket is at least partially disposed between the second mounting post and the third mounting post. In some implementations, the clamping plate is disposed on an angled surface of the first flange and also includes a clamping plate aperture. The fastener is disposed within the clamping plate aperture.

In some implementations, the mounting bracket assembly includes a horizontal flange disposed on a top surface of the first flange, the horizontal flange including a first aperture. A portion of the mounting plate is arranged in the first aperture of the horizontal flange. A portion of the brace in contact with the mounting plate is curved.

The first post first aperture has a first post back and a first post width, the second post first aperture has a second post back and a second post width, the third post first aperture has a third post back and a third post width, and in some implementations, the third post width is more than the first post width and the second post width. The cross-section extending through the receptacle and the mounting plate, the planar surface and the curved surface are at an angle between 45° and 75°, inclusive, with respect to each other.

In some implementations, the mounting bracket assembly also includes a first mounting tab extending from a surface of the mounting plate at a first tab location, the first mounting tab having a first tab aperture. The mounting bracket assembly also includes a second mounting tab extending from the surface of the mounting plate at a second tab location, the second mounting tab having a second tab aperture. A surface of the first mounting tab at least partially faces a surface of the second mounting tab. The outer bracket also includes a first protrusion extending from the surface of the mounting plate, where at least a portion of the first protrusion is located between a plane in which the surface of the first mounting tab extends and a plane in which the surface of the second mounting tab extends. The first protrusion has a surface that contacts the first inner bracket.

In another embodiment, a mounting bracket assembly includes a first inner bracket and an outer bracket. The outer bracket includes a mounting plate, a first mounting post, a second mounting post, a first mounting tab, and a second mounting tab. The first mounting post is located at a first location of the mounting plate and has a first post first aperture extending in a first direction. The second mounting post located at a second location of the mounting plate and has a second post first aperture extending in a second direction that is parallel to the first direction. The first mounting tab extends from a surface of the mounting plate at a third location, the first mounting tab has a first tab aperture. The second mounting tab extends from the surface of the mounting plate at a second tab location, the second mounting tab having a second tab aperture. A surface of the first mounting tab faces a surface of the second mounting tab. The outer bracket further includes a first protrusion extending from the surface of the mounting plate. At least a portion of the first protrusion is located between a plane in which the surface of the first mounting tab extends and a plane in which the surface of the second mounting tab extends, the first protrusion has a surface that contacts the first inner bracket.

In some implementations, the mounting bracket assembly also includes a second inner bracket, a third mounting tab extending from the surface of the mounting plate at a third tab location, the third mounting tab having a third tab aperture, and a fourth mounting tab extending from the surface of the mounting plate at a fourth tab location, the fourth mounting tab having a fourth tab aperture. A surface of the third mounting tab at least partially faces a surface of the fourth mounting tab. A second protrusion extends from the surface of the mounting plate, where at least a portion of the second protrusion is located between the plane in which the surface of the third mounting tab extends and the plane in which the surface of the fourth mounting tab extends. The second protrusion has a surface that contacts the second inner bracket.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims, in which:
FIG. 1 is a block schematic diagram of an example aftertreatment system;
FIG. 2 is a perspective view of a mounting bracket assembly;
FIG. 3 is a perspective view of an example outer bracket of the mounting bracket assembly;
FIG. 4 is another perspective view of the example outer bracket of the mounting bracket assembly;
FIG. 5 is a cross-sectional view of a portion of an example mounting bracket assembly;
FIG. 6 is a front view of an example inner mounting bracket and mounting bracket body mount; and
FIG. 7 is a side view of a portion of the mounting bracket assembly of FIG. 2.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION

Following below are more detailed descriptions of various concepts related to, and implementations of a mounting bracket assembly for aftertreatment systems. The various concepts introduced above and discussed in greater detail below may be implemented in any of a number of ways, as the described concepts are not limited to any particular manner of implementation. Examples of specific implementations and applications are provided primarily for illustrative purposes.

### I. Overview

An aftertreatment system may be mounted to a chassis and/or a frame of a vehicle. It can be difficult to securely mount and distribute the load of the aftertreatment system. For example, there can be significant strain on fasteners used to mount the aftertreatment system.

Implementations herein are directed to a mounting bracket assembly that is capable of providing sufficient clamping pressure to secure the aftertreatment system to the chassis and/or frame. The mounting bracket assembly may include multiple loading paths to increase the structural durability as well as various features to overcome manufacturing constraints. The mounting bracket assembly may include an outer bracket to mount and fasten the aftertreatment system to the chassis. The mounting bracket assembly may also include a first inner bracket that secures the aftertreatment system to the outer bracket. The first inner bracket and the outer bracket are coupled by a clamping plate and a fastener. The mounting bracket assembly may also include a mounting bracket body mount. The mounting bracket body mount may extend from the inner bracket and be in contact with components of the aftertreatment system.

The outer bracket may include a brace having a receptacle with an angle to receive the first inner bracket. The angle may assist in manufacturing and prevent slipping of the outer bracket from the first inner bracket during vibrations and loading. The outer bracket may also include a mounting plate. The mounting plate may include a first protrusion. The first protrusion is in contact with the first inner bracket, and provides an additional load path while further increasing structural durability of the mounting bracket assembly.

### II. Overview of Example Aftertreatment System

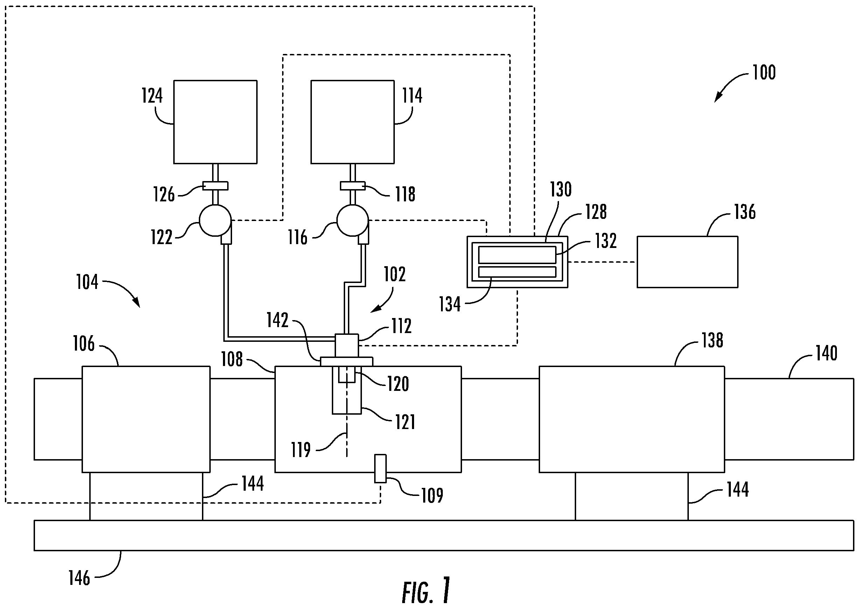

FIG. 1 depicts an aftertreatment system 100 configured to treat an exhaust released by an internal combustion engine. The aftertreatment system 100 includes an exhaust conduit system 104 configured to receive the exhaust from the internal combustion engine. The aftertreatment system 100 further includes a particulate filter 106 (e.g., a diesel particulate filter (DPF), etc.) coupled to the exhaust conduit system 104 and configured to (e.g., structured to, able to, etc.) remove particulate matter, such as soot, from the exhaust flowing in the exhaust conduit system 104. The particulate filter 106 includes an inlet, where the exhaust is received, and an outlet, where the exhaust exits after having particulate matter substantially filtered from the exhaust and/or converting the particulate matter into carbon dioxide. In some implementations, the particulate filter 106 may be omitted.

The aftertreatment system 100 further includes a decomposition chamber 108 (e.g., reactor, reactor pipe, conduit, etc.) disposed downstream of the particulate filter 106. The decomposition chamber 108 is configured to receive the exhaust from the particulate filter 106. The aftertreatment system 100 further includes a treatment fluid delivery system 102 coupled to the decomposition chamber 108. The treatment fluid delivery system 102 is configured to deliver treatment fluid to the decomposition chamber 108. The treatment fluid may be, for example, a reductant (e.g., urea, diesel exhaust fluid (DEF), Adblue^{®}, a urea water solution (UWS), an aqueous urea solution (e.g., AUS32, etc.), and/or other similar fluids) or a hydrocarbon fluid (e.g., fuel, oil, additive, etc.). When the reductant is introduced into the exhaust, reduction of emission of undesirable components (e.g., NOx, etc.) in the exhaust may be facilitated. When the hydrocarbon fluid is introduced into the exhaust, the temperature of the exhaust may be increased (e.g., to facilitate regeneration of components of the aftertreatment system 100, etc.). For example, the aftertreatment system 100 may include a spark plug 109 (e.g., igniter, etc.) configured to increase the temperature of the exhaust by combusting the hydrocarbon fluid within the exhaust. The decomposition chamber 108 includes an inlet in fluid communication with the particulate filter 106 to receive the exhaust containing NOx emissions and an outlet for the exhaust, NOx emissions, ammonia, and/or the treatment fluid to flow to downstream components of the aftertreatment system 100.

The treatment fluid delivery system 102 includes a doser assembly 112 (e.g., dosing module, etc.) configured to dose the treatment fluid into the decomposition chamber 108 (e.g., via an injector). The doser assembly 112 is mounted to the decomposition chamber 108 such that the doser assembly 112 may dose the treatment fluid into the exhaust flowing through the exhaust conduit system 104.

The doser assembly 112 is fluidly coupled to (e.g., fluidly configured to communicate with, etc.) a treatment fluid source 114. The treatment fluid source 114 may include multiple treatment fluid sources 114. The treatment fluid source 114 may be, for example, a diesel exhaust fluid tank containing Adblue^{®}. A treatment fluid pump 116 (e.g., supply unit, etc.) is used to pressurize the treatment fluid from the treatment fluid source 114 for delivery to the doser assembly 112. In some embodiments, the treatment fluid pump 116 is pressure-controlled (e.g., controlled to obtain a target pressure, etc.). The treatment fluid pump 116 may include a treatment fluid filter 118. The treatment fluid filter 118 filters (e.g., strains, etc.) the treatment fluid prior to the treatment fluid being provided to internal components (e.g., pistons, vanes, etc.) of the treatment fluid pump 116. For example, the treatment fluid filter 118 may inhibit or prevent the transmission of solids (e.g., solidified treatment fluid, contaminants, etc.) to the internal components of the treatment fluid pump 116. In this way, the treatment fluid filter 118 may facilitate prolonged desirable operation of the treatment fluid pump 116. In some embodiments, the treatment fluid pump 116 is coupled (e.g., fastened, attached, affixed, welded, etc.) to a chassis of a vehicle associated with the aftertreatment system 100.

The doser assembly 112 includes at least one injector 120. Each injector 120 is configured to dose the treatment fluid into the exhaust (e.g., within the decomposition chamber 108, etc.) at an injection axis 119. The aftertreatment system 100 may include a mixer 121 (e.g., a mixing body assembly, a swirl generating device, a vane plate, inlet plate, deflector plate, etc.). In some embodiments, at least a portion of the mixer 121 may be located within the decomposition chamber 108. In further embodiments, at least a portion of the mixer 121 may also be located in a conduit of the exhaust conduit system 104 (e.g., a conduit upstream of the decomposition chamber 108, etc.). The mixer 121 is configured to receive exhaust from the decomposition chamber 108 and the treatment fluid from the injector 120. The mixer 121 is also configured to facilitate mixing of the exhaust and the treatment fluid. The mixer 121 is configured to facilitate swirling (e.g., tumbling, rotation, etc.) of the exhaust and/or the treatment fluid and mixing (e.g., combination, etc.) of the exhaust and the treatment fluid so as to disperse the treatment fluid within the exhaust downstream of the mixer 121. By dispersing the treatment fluid within the exhaust (e.g., to obtain an increased uniformity index, etc.) using the mixer 121, reduction of emission of undesirable components in the exhaust is enhanced.

In some embodiments, the injection axis 119 extends into the mixer 121. The injection axis 119 may extend into the mixer 121 at an angle relative to a central axis of the mixer 121. For example, in some embodiments, the injection axis 119 may be substantially coincident with a central axis of the mixer 121. In other embodiments, the injection axis 119 may be substantially perpendicular to the central axis of the mixer 121. In yet other embodiment, the injection axis 119 may be substantially parallel to the central axis of the mixer 121.

In some embodiments, the injector 120 is not directly coupled to the mixer 121. In these embodiments, the injector 120 and the mixer 121 may each be coupled to a same component (e.g., housing, panel, chamber, body, etc.). In other embodiments, the injector 120 is directly coupled to the mixer 121. In these embodiments, the injector 120 and the mixer 121 may also each be coupled to the same component. In some embodiments, the injector 120 is not disposed within the mixer 121. In other embodiments, the injector 120 may be at least partially disposed within the mixer 121.

In some embodiments, the treatment fluid delivery system 102 also includes an air pump 122. In these embodiments, the air pump 122 draws air from an air source 124 (e.g., air intake, etc.) and through an air filter 126 disposed upstream of the air pump 122. Additionally, the air pump 122 provides the air to the doser assembly 112 via a conduit. In these embodiments, the doser assembly 112 is configured to mix the air and the treatment fluid into an air-treatment fluid mixture and to provide the air-treatment fluid mixture into the decomposition chamber 108. In other embodiments, the treatment fluid delivery system 102 does not include the air pump 122, the air source 124, and/or the air filter 126. In such embodiments, the doser assembly 112 is not configured to mix the treatment fluid with the air.

The spark plug 109, the doser assembly 112, and the treatment fluid pump 116 are also electrically or communicatively coupled to a treatment fluid delivery system controller 128. The treatment fluid delivery system controller 128 may control the spark plug 109 to ignite the treatment fluid in the decomposition chamber 108. The treatment fluid delivery system controller 128 controls the doser assembly 112 to dose the treatment fluid into the decomposition chamber 108. The treatment fluid delivery system controller 128 may also control the treatment fluid pump 116.

The treatment fluid delivery system controller 128 includes a processing circuit 130. The processing circuit 130 includes a processor 132 and a memory 134. The processor 132 may include a microprocessor, an application-specific integrated circuit (ASIC), a field-programmable gate array (FPGA), etc., or combinations thereof. The memory 134 may include, but is not limited to, electronic, optical, magnetic, or any other storage or transmission device capable of providing a processor, ASIC, FPGA, etc. with program instructions. This memory 134 may include a memory chip, Electrically Erasable Programmable Read-Only Memory (EEPROM), Erasable Programmable Read Only Memory (EPROM), flash memory, or any other suitable memory from which the treatment fluid delivery system controller 128 can read instructions. The instructions may include code from any suitable programming language. The memory 134 may include various modules that include instructions which are configured to be implemented by the processor 132.

In various embodiments, the treatment fluid delivery system controller 128 is configured to communicate with a central controller 136 (e.g., engine control unit (ECU), engine control module (ECM), etc.) of an internal combustion engine having the aftertreatment system 100. In some embodiments, the central controller 136 and the treatment fluid delivery system controller 128 are integrated into a single controller.

In some embodiments, the central controller 136 is communicable with a display device (e.g., screen, monitor, touch screen, heads up display (HUD), indicator light, etc.). The display device may be configured to change state in response to receiving information from the central controller 136. For example, the display device may be configured to change between a static state (e.g., displaying a green light, displaying a "SYSTEM OK" message, etc.) and an alarm state (e.g., displaying a blinking red light, displaying a "SERVICE NEEDED" message, etc.) based on a communication from the central controller 136. By changing state, the display device may provide an indication to a user (e.g., operator, etc.) of a status (e.g., operation, in need of service, etc.) of the treatment fluid delivery system 102.

The aftertreatment system 100 further includes a catalyst member 138 (e.g., SCR (Selective Catalytic Reduction) catalyst member, etc.) disposed downstream of the decomposition chamber 108. As a result, the treatment fluid is injected upstream of the catalyst member 138 such that the catalyst member 138 receives a mixture of the treatment fluid and exhaust. The treatment fluid droplets undergo the processes of evaporation, thermolysis, and hydrolysis to form non-NOx emissions (e.g., gaseous ammonia, etc.) within the exhaust conduit system 104.

The catalyst member 138 includes an inlet in fluid communication with the decomposition chamber 108 from which exhaust and treatment fluid are received and an outlet in fluid communication with an outlet 140 of the exhaust conduit system 104. The outlet 140 may release the treated exhaust into an ambient environment or another treatment system.

The aftertreatment system 100 may further include an oxidation catalyst member (e.g., a diesel oxidation catalyst (DOC), ammonia oxidation catalyst (AMOx), etc.) in fluid communication with the exhaust conduit system 104 (e.g., downstream of the catalyst member 138, upstream of the particulate filter 106, upstream of the decomposition chamber 108, etc.) to oxidize hydrocarbons and carbon monoxide in the exhaust.

In some implementations, the particulate filter 106 may be positioned downstream of the decomposition chamber 108. For instance, the particulate filter 106 and the catalyst member 138 may be combined into a single unit. In some implementations, the doser assembly 112 may instead be positioned downstream of a turbocharger or upstream of the turbocharger.

The aftertreatment system 100 may further include a doser mounting bracket 142 (e.g., mounting bracket, coupler, plate, etc.). The doser mounting bracket 142 couples the doser assembly 112 to a component of the aftertreatment system 100 (e.g., the decomposition chamber 108, etc.). The doser mounting bracket 142 may be configured as an insulator (e.g., vibrational insulator, thermal insulator, etc.). For example, the doser mounting bracket 142 may be configured to mitigate the transfer of heat from the exhaust passing through the exhaust conduit system 104 to the doser assembly 112. In this way, the doser assembly 112 is capable of operating more efficiently and desirably. The doser mounting bracket 142 may be configured to mitigate transfer of vibrations from the component of the aftertreatment system 100 to the doser assembly 112. Additionally, the doser mounting bracket 142 is configured to aid in reliable installation of the doser assembly 112. This may decrease manufacturing costs associated with the aftertreatment system 100 and ensure repeated desirable installation of the doser assembly 112.

In various embodiments, the doser mounting bracket 142 couples the doser assembly 112 to the decomposition chamber 108. In some embodiments, the doser mounting bracket 142 couples the doser assembly 112 to an exhaust conduit of the exhaust conduit system 104. For example, the doser mounting bracket 142 may couple the doser assembly 112 to an exhaust conduit of the exhaust conduit system 104 that is upstream of the decomposition chamber 108. In some embodiments, the doser mounting bracket 142 couples the doser assembly 112 to the particulate filter 106 and/or the catalyst member 138. The location of the doser mounting bracket 142 may be varied depending on the application of the aftertreatment system 100. For example, in some aftertreatment systems 100, the doser mounting bracket 142 may be located further upstream than in other aftertreatment systems 100. Furthermore, some aftertreatment systems 100 may include multiple doser assemblies 112 and therefore may include multiple doser mounting brackets 142.

The aftertreatment system 100 may further include a mounting bracket assembly 144. The mounting bracket assembly 144 couples at least one of the components of the aftertreatment system 100 (e.g., the particular filter 106, the decomposition chamber 108, etc.) to a chassis 146 (e.g., frame, etc.). The chassis 146 is a structure on which the aftertreatment system 100 is mounted to (e.g., attached, coupled, etc.) via the mounting bracket assembly 144. The chassis 146 may support other components of an internal combustion engine system or a vehicle associated with the aftertreatment system 100.

### III. Overview of Example Mounting Bracket Assembly

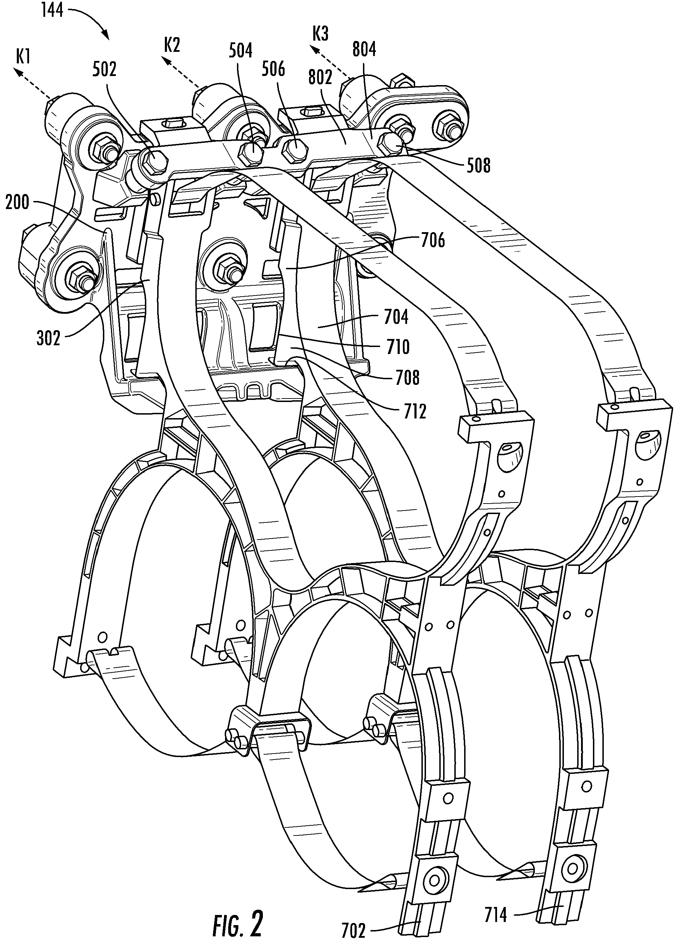

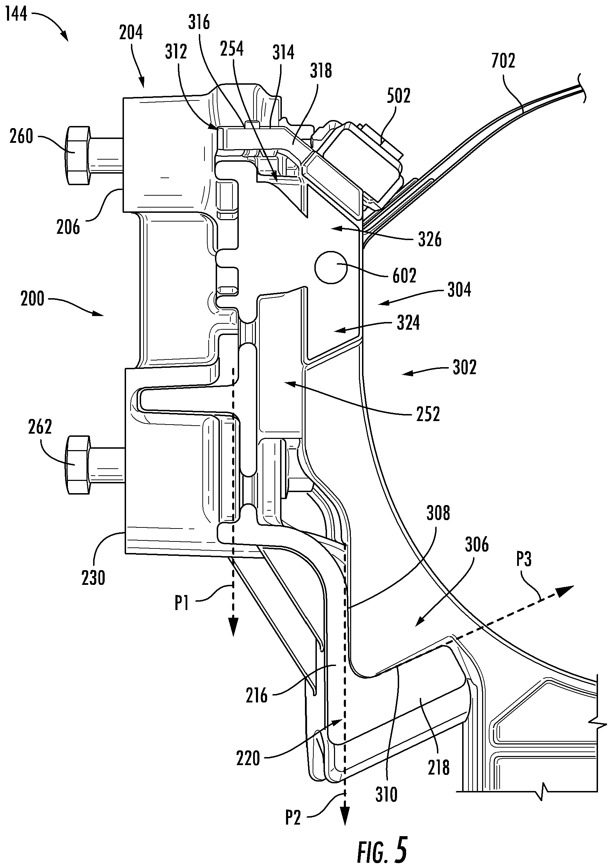

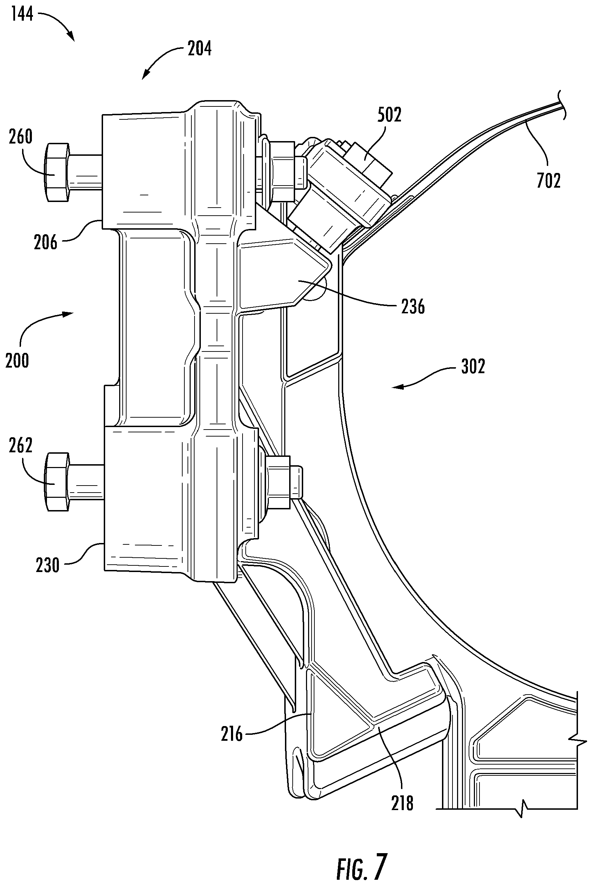

FIG. 2 illustrates the mounting bracket assembly 144 according to various embodiments. FIG. 5 illustrates a cross-sectional view of a portion of the mounting bracket assembly 144 while FIG. 7 illustrates a side view of a portion of the mounting bracket assembly 144. The mounting bracket assembly 144 may be machined (e.g., drilled, tapped, surfaced, honed, polished, lapped, reamed, cut, etc.) in multiple different configurations so as to support simultaneous coupling to different combinations of multiple components of the aftertreatment system 100.

The portion of the mounting bracket assembly 144 of FIG. 5 includes an outer bracket 200, a first inner bracket 302, a fastener 502, and a first mounting bracket body mount 702. In various embodiments, as shown in FIG. 2, the mounting bracket assembly 144 further includes a second inner bracket 704, a second mounting bracket body mount 714, and a clamping plate 802.

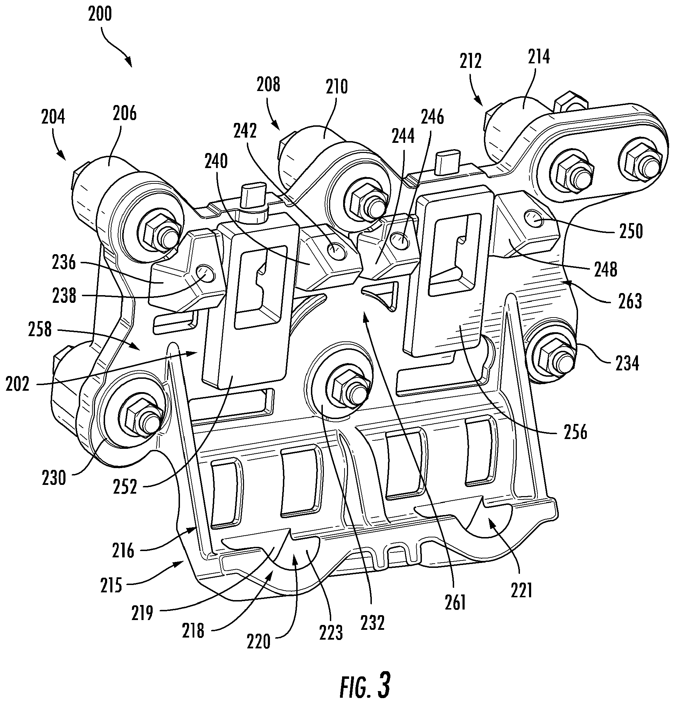

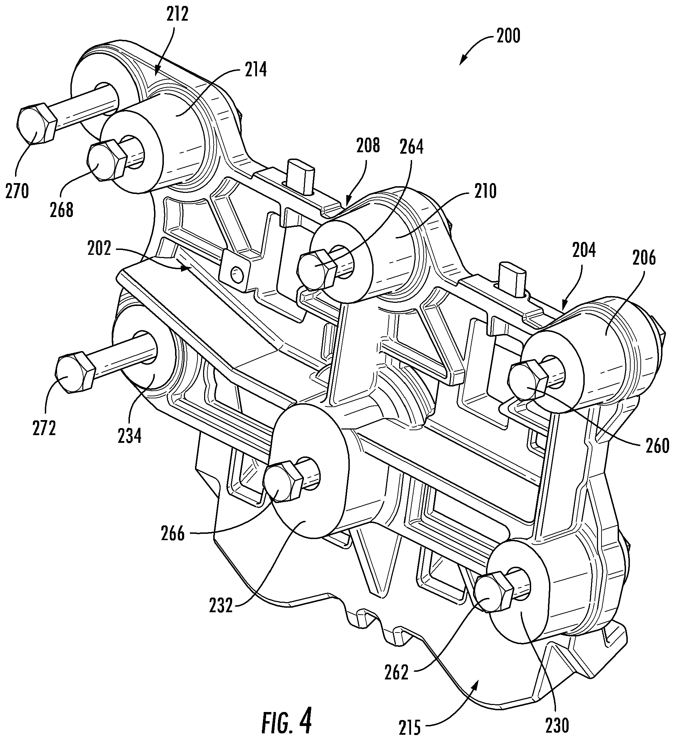

The mounting bracket assembly 144 includes an outer bracket 200. The outer bracket 200 is configured to attach the aftertreatment system 100 to the chassis 146. For example, FIGS. 3 and 4 illustrate an example embodiment of the outer bracket 200. The outer bracket 200 contacts the first inner bracket 302, and, in various embodiments, the second inner bracket 704.

The outer bracket 200 includes a mounting plate 202. The mounting plate 202 provides a platform for attaching components to the outer bracket 200. The mounting plate 202 distributes a weight or a load of the aftertreatment system 100. The mounting plate 202 includes a mounting plate surface.

The outer bracket 200 also includes a first mounting post 204 (e.g., projection, etc.). The first mounting post 204 protrudes from the mounting plate 202. The first mounting post 204 includes a first post first aperture 206 (e.g., hole). The first mounting post 204 is coupled to the chassis 146 via a first fastener 260 extending through the first post first aperture 206. The first post first aperture 206 provides the outer bracket 200 with a mounting (e.g., contacting, securing, etc.) point to the chassis 146. The first post first aperture 206 extends (e.g., protrudes, projects, etc.) in a first direction K1.

As shown in FIG. 3, for example, the first mounting post 204 is located at and extends from a first location 258 of the mounting plate 202. As a result, the first mounting post 204 carries the load and is coupled to the chassis 146 at the first location 258.

In various embodiments, the first mounting post 204 includes a first post second aperture 230. The first post second aperture 230 protrudes from the mounting plate 202 and is located below the first post first aperture 206. The first mounting post 204 may be coupled to the chassis 146 via a second fastener 262 extending through the first post second aperture 230. The first post second aperture 230 provides the first mounting post 204 with an additional mounting point to the chassis 146. The first post second aperture 230 extends in the first direction K1. As shown in FIGS. 3 and 4, for example, the first post second aperture 230 is aligned with the first post first aperture 206.

The outer bracket 200 also includes a second mounting post 208 (e.g., projection, etc.). The second mounting post 208 protrudes from the mounting plate 202. The second mounting post 208 includes a second post first aperture 210 (e.g., hole). The second mounting post 208 is coupled to the chassis 146 via a third fastener 264 extending through the second post first aperture 210. The second post first aperture 210 provides the outer bracket 200 with an additional mounting (e.g., contacting, securing, etc.) point to the chassis 146. The second post first aperture 210 extends (e.g., protrudes, projects, etc.) in a second direction K2. The second direction K2 is parallel to the first direction K1.

As shown in FIG. 3, for example, the second mounting post 208 is located at and extends from a second location 261 of the mounting plate 202 (e.g., at a midpoint of the mounting plate 202). In various embodiments, the second mounting post 208 is aligned with the first mounting post 204. As a result, the second mounting post 208 carries the load and is coupled to the chassis 146 at the second location 261.

In various embodiments, the second mounting post 208 includes a second post second aperture 232. The second post second aperture 232 protrudes from the mounting plate 202 and is located below the second post first aperture 210. The second mounting post 208 may be coupled to the chassis 146 via a fourth fastener 266 extending through the second post second aperture 232. The second post second aperture 232 provides the second mounting post 208 with an additional mounting point to the chassis 146. The second post second aperture 232 extends in the second direction K2. As shown in FIG. 3, for example, the second post second aperture 232 is aligned with the second post first aperture 210.

The outer bracket 200 also includes a third mounting post 212 (e.g., projection, etc.). The third mounting post 212 protrudes from the mounting plate 202. The third mounting post 212 includes a third post first aperture 214 (e.g., hole). The third mounting post 212 is coupled to the chassis 146 via a fifth fastener 268 extending through the third post first aperture 214. In various embodiments, such as in FIG. 4, the mounting bracket assembly 144 also includes a sixth fastener 270. The sixth fastener 270 extends through an aperture in the third mounting post 212 to couple the outer bracket 200 to the chassis 146. The third post first aperture 214 provides the outer bracket 200 with an additional mounting (e.g., contacting, securing, etc.) point to the chassis 146. The third post first aperture 214 extends (e.g., protrudes, projects, etc.) in a third direction K3. The third direction K3 is parallel to the first direction K1.

As shown in FIG. 3, for example, the third mounting post 212 is located at and extends from a third location 263 of the mounting plate 202 (e.g., opposite the first location 258 from which the first mounting post 204 extends). In various embodiments, the third mounting post 212 is aligned with the first mounting post 204. As a result, the third mounting post 212 carries the load and is coupled to the chassis 146 at the third location 263.

In various embodiments, the third mounting post 212 includes a third post second aperture 234. The third post second aperture 234 protrudes from the mounting plate 202 and is located below the third post first aperture 214. The third mounting post 212 may be coupled to the chassis 146 via a seventh fastener 272 extending through the third post second aperture 234. The third post second aperture 234 provides the third mounting post 212 with an additional mounting point to the chassis 146. The third post second aperture 234 extends in the third direction K3. As shown in FIG. 3, for example, the third post second aperture 234 is aligned with the third post first aperture 214.

In various embodiments, the first post second aperture 230, the second post second aperture 232, and the third post second aperture 234 are flush and parallel to each other. In various embodiments, the first post first aperture 206, the second post first aperture 210, the third post first aperture 214, the first post second aperture 230, the second post second aperture 232, and the third post second aperture 234 are flush and parallel to each other.

For example, as seen in FIGS. 5 and 7, the first post first aperture 206 and the first post second aperture 230 are flush and parallel to each other. The first post second aperture 230 is located below the first post first aperture 206. The first post first aperture 206 and the first post second aperture 230 extend from the first mounting post 204 in the first direction K1.

As shown in FIG. 3, the first post first aperture 206 has a first post back and a first post back width, the second post first aperture 210 has a second post back and a second post back width, and the third post first aperture 214 has a third post back and a third post back width. The first post back, the second post back, and the third post back are a surface of the first post first aperture 206, second post first aperture 210, and the third post first aperture 214 opposite to a surface of the outer bracket 200 in contact with the chassis 146. The first post back width is a width of the first post back. The second post back width is a width of the second post back. The third post back width is a width of the third post back. In various embodiments, the third post back width is greater than the first post back width and the second post back width.

The outer bracket 200 also includes a brace 215 (e.g., support, projection, fixture, etc.). The brace 215 extends from (e.g., projects, etc.) the mounting plate 202. As shown in FIG. 3, for example, the brace 215 extends behind the outer bracket 200 (e.g., away from the mounting plate 202). As is described in more detail herein, the brace 215 provides the outer bracket 200 with additional attachment to the first inner bracket 302. At least a portion of the brace 215 is located between the first mounting post 204 and the third mounting post 212. In some embodiments, as shown in FIG. 3, the brace 215 extends at an angle away from the mounting plate 202.

The brace 215 includes a first portion 216 (e.g., part, segment, etc.) and a second portion 218. The first portion 216 extends from a surface of the mounting plate 202. The second portion 218 extends from an edge of the first portion 216. The edge of the first portion 216 is the edge extending from a part of the first portion 216 in contact with the mounting plate 202. In various embodiments, the edge of the first portion 216 is the edge of the first portion 216 coupled to the mounting plate 202 and adjacent to the first post second aperture 230 and the third post second aperture 234. In various embodiments, the part of the first portion 216 coupled to the surface of the mounting plate 202 and/or a portion of the brace 215 in contact with the mounting plate 202 is curved. In various embodiments, the second portion 218 extends from the first portion 216 at an angle.

The brace 215 also includes a receptacle 220 (e.g., receiving space, hole, etc.). For example, as illustrated in FIG. 3, the receptacle 220 is defined by a planar surface 219 (e.g., flat surface, etc.) of the first portion 216 and a curved surface 223 (e.g., cylindrical surface, etc.) of the second portion 218. The receptacle 220 is located opposite to the part of the brace 215 coupled to the surface of the mounting plate 202. As is described in more detail herein, the receptacle 220 receives (e.g., houses, holds, etc.) and is in contact with the first inner bracket 302.

An angle between the planar surface 219 and the curved surface 223 of the receptacle 220 at a cross-section extending through the receptacle 220 and the mounting plate 202 is between 35° and 85°, inclusive, with respect to each other. The angle is preferably 60°. The angle provides the first inner bracket 302 with a resting surface during manufacturing and a self-locking mechanism. The angle also prevents slipping of the first inner bracket 302 from the outer bracket 200 during vibrations and operation. The cross-section extends through a middle (e.g., part of the receptacle 220 with a greatest height) of the receptacle 220.

In various embodiments, the angle between the planar surface 219 and the curved surface 223 of the receptacle 220 at a cross-section extending through the receptacle 220 and the mounting plate 202 is between 45° and 75°, inclusive, with respect to each other.

In various embodiments, the brace 215 also includes a second receptacle 221. For example, as illustrated in FIG. 3, the second receptacle 221 is defined by a second planar surface of the first portion 216 and a second curved surface of the second portion 218. The second receptacle 221 receives the second inner bracket 704. The second receptacle 221 is located opposite to the part of the brace 215 coupled to the surface of the mounting plate 202. An angle between the second planar surface and the second curved surface of the second receptacle 221 at a cross-section extending through the second receptacle 221 and the mounting plate 202 is between 35° and 85°, inclusive. The angle is preferably 60°. The angle of the second receptacle 221 provides the second inner bracket 704 with a resting surface during manufacturing and a self-locking mechanism. The angle of the second receptacle 221 also prevents slipping of the second inner bracket 704 from the outer bracket 200 during vibrations and operations.

The cross-section extends through a middle (e.g., part of the second receptacle 221 with a greatest height) of the second receptacle 221. The cross-section extending through the second receptacle 221 is parallel to the cross-section of the receptacle 220. As shown in FIG. 3, for example, the first portion 216 and the second portion 218 also define the second receptacle 221 in which the second inner bracket 704 is received.

The mounting bracket assembly 144 also includes the first inner bracket 302. The first inner bracket 302 is in contact with and coupled to the outer bracket 200. The first inner bracket 302 is at least partially disposed between the first mounting post 204 and the second mounting post 208. The first inner bracket 302 is in contact with at least a portion of the multiple components of the aftertreatment system 100. The first inner bracket 302 transfers the load of the aftertreatment system 100 to the outer bracket 200 and provides stability and support to the aftertreatment system 100. In various embodiments, as seen in FIGS. 5 and 7, portions of the first inner bracket 302 are flush and parallel to the outer bracket 200.

The first inner bracket 302 includes a first flange 304 (e.g., member, etc.). The first flange 304 is in contact with the mounting plate 202. The first flange 304 is disposed on a first plane P1 and includes a first flange surface. The first flange surface is in confronting relation with the mounting plate surface. The first inner bracket 302 includes a first flange protrusion 306 (e.g., extension, projection, etc.). The first flange protrusion 306 extends from the first flange 304. The first flange protrusion 306 is in contact with the first portion 216 and the second portion 218.

The first flange protrusion 306 includes a first flange protrusion first surface 308 and a first flange protrusion second surface 310. The first flange protrusion first surface 308 is in confronting relation with the planar surface 219 of the first portion 216. The first flange protrusion first surface 308 is disposed on a second plane P2. The first flange protrusion second surface 310 is in confronting relation with the curved surface 223 of the second portion 218. The first flange protrusion second surface 310 is disposed on a third plane P3. An angle between the second plane P2 and the third plane P3 is between 35° and 85°, inclusive, with respect to each other. The angle is preferably 60°. In various embodiments, for example, as seen in FIG. 5, the first plane P1 is parallel to the second plane P2.

In various embodiments, the first flange protrusion first surface 308 and the first flange protrusion second surface 310 are flush and parallel to the planar surface 219 and the curved surface 223. The angle between the second plane P2 and the third plane P3 is between 45° and 75°, inclusive, with respect to each other. The first flange protrusion 306 is received by the receptacle 220.

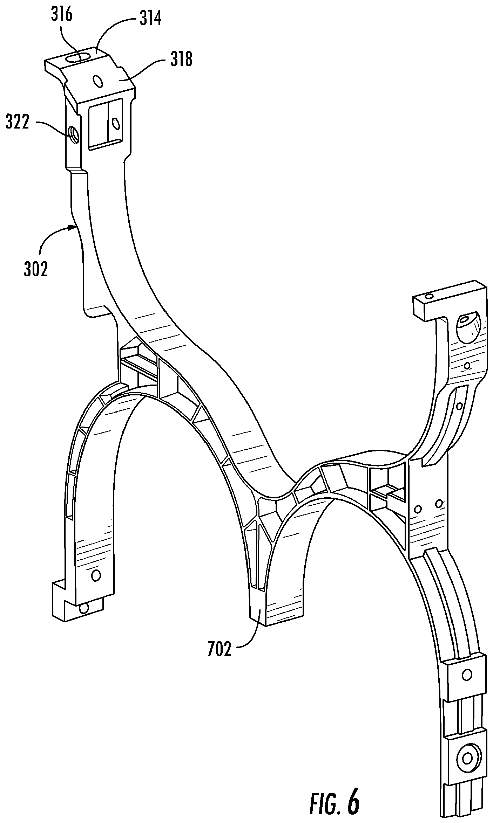

In various embodiments, such as in FIGS. 5 and 6, the first flange 304 includes a horizontal flange 312. The horizontal flange 312 is disposed on the top surface 314 of the first flange 304. The horizontal flange 312 provides the first inner bracket 302 with additional support and connection to the outer bracket 200. The outer bracket 200 is in contact with and at least partially parallel to the horizontal flange 312.

In various embodiments, the horizontal flange 312 includes a first aperture 316. A portion of the mounting plate 202 is arranged in the first aperture 316 of the horizontal flange 312. The portion of the mounting plate 202 arranged in the first aperture 316 acts as an additional connection (e.g., a locating pin). The additional connection provides support and simplifies assembly of the mounting bracket assembly 144. The portion of the mounting plate 202 arranged in the first aperture 316 does not carry load.

In various embodiments, the mounting bracket assembly 144 includes the second inner bracket 704 as seen in FIG. 2. The second inner bracket 704 is in contact with and coupled to the outer bracket 200. The second inner bracket 704 is in contact with portions of the multiple components of the aftertreatment system 100. The second inner bracket 704 is at least partially disposed between the second mounting post 208 and the third mounting post 212. The second inner bracket 704 transfers the load of the aftertreatment system 100 to the outer bracket 200 and provides stability and support to the aftertreatment system 100. In various embodiments, as seen in FIG. 2, portions of the second inner bracket 704 are flush and parallel to the outer bracket 200.

The second inner bracket 704 includes a second flange 706. The second flange 706 is in contact with the mounting plate 202. The second flange 706 is disposed on the first plane P1 and includes a second flange surface. The second flange surface is in confronting relation with the mounting plate surface. The second inner bracket 704 includes a second flange protrusion 708. The second flange protrusion 708 extends from the second flange 706. The second flange protrusion 708 is in contact with the first portion 216 and the second portion 218.

The second flange protrusion 708 includes a second flange protrusion first surface 710 and a second flange protrusion second surface 712. The second flange protrusion first surface 710 is in confronting relation with the second planar surface of the first portion 216. The second flange protrusion first surface 710 is disposed on the second plane P2. The second flange protrusion second surface 712 is in confronting relation with the second curved surface of the second portion 218. The second flange protrusion second surface 712 is disposed on the third plane P3. An angle between the second flange protrusion first surface 710 and the second flange protrusion second surface 712 (e.g., the second plane P2 and the third plane P3) is between 35° and 85°, inclusive, with respect to each other. The angle is preferably 60°.

In various embodiments, the second flange protrusion first surface 710 and the second flange protrusion second surface 712 are flush and parallel to the second planar surface and the second curved surface. The angle between the second flange protrusion first surface 710 and the second flange protrusion second surface 712 is between 45° and 75°, inclusive, with respect to each other. The second flange protrusion 708 is received by the second receptacle 221.

The outer bracket 200 also includes a first mounting tab 236 (e.g., protrusion, extension, projection, etc.). The first mounting tab 236 extends from the surface of the mounting plate 202 and is located adjacent to the first post first aperture 206. The first mounting tab 236 includes a first tab aperture 238 (e.g., hole, etc.). The first mounting tab 236 provides additional attachment and security for the outer bracket 200 to the chassis 146.

In various embodiments, such as seen in FIG. 3, the first mounting tab 236 has a top surface at an angle in relation to the surface of the mounting plate 202. The first mounting tab 236 is located at a first tab location (e.g., a location of the first mounting tab 236) of the mounting plate 202. For example, as seen in FIG. 3, the location is above the edge in which the brace 215 contacts the mounting plate 202 and is adjacent to the first post second aperture 230.

The outer bracket 200 includes a second mounting tab 240. The second mounting tab 240 extends from the surface of the mounting plate 202 and is located adjacent to the second post first aperture 210. The second mounting tab 240 includes a second tab aperture 242. The second mounting tab 240 provides additional attachment and security for the outer bracket 200 to the chassis 146.

In various embodiments, such as seen in FIG. 3, the second mounting tab 240 has a top surface at an angle in relation to the surface of the mounting plate 202. In various embodiments, a surface of the first mounting tab 236 at least partially faces a surface of the second mounting tab 240. The first inner bracket 302 extends between the first mounting tab 236 and the second mounting tab 240. The second mounting tab 240 is located at a second tab location of the mounting plate 202. For example, as seen in FIG. 3, the second tab location is located adjacent and to a side of the second post first aperture 210.

The outer bracket 200 includes a third mounting tab 244. The third mounting tab 244 extends from the surface of the mounting plate 202 and is located adjacent to the second post first aperture 210. The third mounting tab 244 includes a third tab aperture 246. The third mounting tab 244 provides additional attachment and security for the outer bracket 200 to the chassis 146.

In various embodiments, such as seen in FIG. 3, the third mounting tab 244 has a top surface at an angle in relation to the surface of the mounting plate 202. The third mounting tab 244 is located at a third tab location of the mounting plate 202. For example, as seen in FIG. 3, the third tab location is located adjacent to the second post first aperture 210, opposite to the second tab location.

The outer bracket 200 includes a fourth mounting tab 248. The fourth mounting tab 248 extends from the surface of the mounting plate 202 and is located adjacent to the third post first aperture 214. The fourth mounting tab 248 includes a fourth tab aperture 250. The fourth mounting tab 248 provides additional attachment and security for the outer bracket 200 to the chassis 146. In various embodiments, such as seen in FIG. 3, the fourth mounting tab 248 has a top surface at an angle in relation to the surface of the mounting plate 202. In various embodiments, a surface of the third mounting tab 244 at least partially faces a surface of the fourth mounting tab 248. The second inner bracket 704 extends between the third mounting tab 244 and the fourth mounting tab 248. The fourth mounting tab 248 is located at a fourth tab location of the mounting plate 202. For example, as seen in FIG. 3, the fourth tab location is located above an edge in which the brace 215 contacts the mounting plate 202 and is adjacent to the third post second aperture 234.

The outer bracket 200 also includes a first protrusion 252 (e.g., projection, etc.). The first protrusion 252 extends from the surface of the mounting plate 202. At least a portion of the first protrusion 252 is located between a plane in which the surface of the first mounting tab 236 and a plane in which the surface of the second mounting tab 240 extends. The first protrusion 252 has a surface that contacts the first inner bracket 302 as seen in FIG. 5. The first protrusion 252 provides the outer bracket 200 with surface contact to the first inner bracket 302 to enhance clamping pressure of the first inner bracket 302 to the outer bracket 200.

In various embodiments, the first protrusion 252 is located between the plane in which the surface of the first mounting tab 236 and the plane in which the surface of the second mounting tab 240 extends. In various embodiments, such as in FIG. 5, the surface of the first protrusion 252 that contacts the first inner bracket 302 is at least partially flush and parallel to the first inner bracket 302.

As seen in FIG. 3, for example, the first protrusion 252 is located at least partially on the cross-section extending through the receptacle 220. The first protrusion 252 is located between a plane in which a surface of the first post second aperture 230 extends and a plane in which a surface of the second post second aperture 232 extends.

In various embodiments, the outer bracket 200 includes a second protrusion 256. The second protrusion 256 extends from the surface of the mounting plate 202. At least a portion of the second protrusion 256 is located between a plane in which the surface of the third mounting tab 244 extends and a plane in which the surface of the fourth mounting tab 248 extends. In various embodiments, the second protrusion 256 has a surface that contacts the second inner bracket 704 as seen in FIG. 2. The second protrusion 256 provides the outer bracket 200 with additional surface contact to the second inner bracket 704 to enhance clamping pressure of the second inner bracket 704 to the outer bracket 200.

As seen in FIG. 3, for example, the second protrusion 256 is located at least partially on the cross-section extending through the second receptacle 221. The second protrusion 256 is located between a plane in which a surface of the third post second aperture 234 extends and a plane in which the surface of the second post second aperture 232 extends.

The mounting bracket assembly 144 also includes the clamping plate 802. The clamping plate 802 is coupled to the first inner bracket 302 by the fastener 502. The clamping plate 802 is disposed on an angled surface 318 of the first flange 304. The clamping plate 802 is in contact with the first mounting tab 236 and the second mounting tab 240. The clamping plate 802 includes a clamping plate aperture 804. The fastener 502 is disposed within the clamping plate aperture 804. The clamping plate 802 secures a connection and provides clamping pressure for the first inner bracket 302 to the outer bracket 200.

In various embodiments, the clamping plate 802 is coupled to the second inner bracket 704 by the fastener 502 as seen in FIG. 2. The clamping plate 802 is also disposed on an angled surface of the second inner bracket 704. The clamping plate 802 is in contact with the third mounting tab 244 and the fourth mounting tab 248. The clamping plate 802 secures a connection and provides clamping pressure for the second inner bracket 704 to the outer bracket 200.

The mounting bracket assembly 144 also includes the fastener 502. The fastener 502 couples the clamping plate 802 and the outer bracket 200. One load path of the aftertreatment system 100 travels through the fastener 502. An additional load path of the aftertreatment system 100 travels through an interface of the clamping plate 802 and the outer bracket 200 (e.g., the first mounting tab 236) near the fastener 502. The fastener 502 is a component of a bolted joint design that the load path travels through. The bolted joint design includes the clamping plate 802 being in contact with the outer bracket 200. The fastener 502 is disposed within the clamping plate aperture 804 and the first tab aperture 238. The load path travels through the joint of the clamping plate 802 to the first mounting tab 236.

In various embodiments, such as seen in FIG. 2, the mounting bracket assembly 144 further includes an eighth fastener 504, a ninth fastener 506, and a tenth fastener 508. The eighth fastener 504, the ninth fastener 506, and the tenth fastener 508 couples the clamping plate 802, the first inner bracket 302, the outer bracket 200, and the second inner bracket 704. The eighth fastener 504 is disposed within a second clamping plate aperture and the second tab aperture 242. The ninth fastener 506 is disposed within a third clamping plate aperture and the third tab aperture 246. The tenth fastener 508 is disposed within a fourth clamping plate aperture and the fourth tab aperture 250. The eighth fastener 504, the ninth fastener 506, and the tenth fastener 508 provide additional bolted joints and, as a result, additional load paths for mounting the aftertreatment system 100. The eighth fastener 504, the ninth fastener 506, and the tenth fastener 508 provide additional support and attachment of the first inner bracket 302 and the second inner bracket 704 to the outer bracket 200.

For example, as seen in FIG. 2, the clamping plate 802 is coupled to the outer bracket 200 by the fastener 502, the eighth fastener 504, the ninth fastener 506, and the tenth fastener 508 at the first mounting tab 236, the second mounting tab 240, the third mounting tab 244, and the fourth mounting tab 248. The clamping plate 802 is also in contact with the first inner bracket 302 and the second inner bracket 704.

The mounting bracket assembly 144 also includes the first mounting bracket body mount 702, for example, as seen in FIG. 6. The first mounting bracket body mount 702 extends from the first inner bracket 302. The first mounting bracket body mount 702 is in contact with portions of the multiple components of the aftertreatment system 100. The first mounting bracket body mount 702 holds and secures components of the aftertreatment system 100 to be mounted.

As seen in FIGS. 2 and 5, for example, the first mounting bracket body mount 702 is coupled to the first inner bracket 302 by a connector 602. The connector 602 connects the first mounting bracket body mount 702 to the first inner bracket 302. In various embodiments, the connector 602 extends through a first flange aperture 322 as seen in FIG. 6.

In various embodiments, the first flange 304 includes a first flange segment 324 and a second flange segment 326. In various embodiments, such as in FIG. 5, the first flange segment 324 is in contact with the first protrusion 252. The first flange segment 324 is flush and parallel to the first protrusion 252. Contact of the first flange segment 324 to the first protrusion 252 provides an additional load path. The contact of the first flange segment 324 to the first protrusion 252 helps distribute the load of the aftertreatment system 100 across the outer bracket 200.

In various embodiments, such as in FIG. 7, the second flange segment 326 is in contact with the first protrusion 252. The second flange segment 326 is flush and parallel to the first protrusion 252. Contact of the second flange segment 326 to the first protrusion 252 provides an additional load path. The contact of the second flange segment 326 to the first protrusion 252 helps distribute the load of the aftertreatment system 100 across the outer bracket 200. In various embodiments, the first flange segment 324 and the second flange segment 326 are separated by the connector 602.

The load paths through the fastener 502, and in various embodiments, the eighth fastener 504, the ninth fastener 506, the tenth fastener 508, and the additional load path of the contacts of the first flange segment 324, the second flange segment 326, the first protrusion 252, and, in various embodiments, the second protrusion 256 align force-displacement relations between the fastener 502 and the contacts. As a result, sufficient clamping pressure is generated after tightening the fastener 502.

In various embodiments, the mounting bracket assembly 144 further includes a second mounting bracket body mount 714, for example, as seen in FIG. 2. The second mounting bracket body mount 714 extends from the second inner bracket 704. The second mounting bracket body mount 714 is coupled to the outer bracket 200. The second mounting bracket body mount 714 is in contact with portions of the multiple components of the aftertreatment system 100. The second mounting bracket body mount 714 holds and secures components of the aftertreatment system 100 to be mounted.

### IV. Configuration of Example Embodiments

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the terms "substantially," "generally," "approximately," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the appended claims.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

The terms "fluidly coupled to" and the like, as used herein, mean the two components or objects have a pathway formed between the two components or objects in which a fluid, such as air, treatment fluid, an air-treatment fluid mixture, exhaust, hydrocarbon fluid, an air-hydrocarbon fluid mixture, may flow, either with or without intervening components or objects. Examples of fluid couplings or configurations for enabling fluid communication may include piping, channels, or any other suitable components for enabling the flow of a fluid from one component or object to another.

It is important to note that the construction and arrangement of the various systems shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the disclosure, the scope being defined by the claims that follow. When the language "a portion" is used, the item can include a portion and/or the entire item unless specifically stated to the contrary.

Also, the term "or" is used, in the context of a list of elements, in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W1 to W2, etc.) herein are inclusive of their maximum values and minimum values (e.g., W1 to W2 includes W1 and includes W2, etc.), unless otherwise indicated. Furthermore, a range of values (e.g., W1 to W2, etc.) does not necessarily require the inclusion of intermediate values within the range of values (e.g., W1 to W2 can include only W1 and W2, etc.), unless otherwise indicated.

## Claims

1. An outer bracket for a mounting bracket assembly for an aftertreatment system, the outer bracket comprising:
a mounting plate;
a first mounting post located at a first location of the mounting plate and having a first post first aperture extending in a first direction;
a second mounting post located at a second location of the mounting plate and having a second post first aperture extending in a second direction that is parallel to the first direction; and
a brace comprising:
a first portion extending from a surface of the mounting plate, and
a second portion extending from an edge of the first portion;
wherein a receptacle is defined by a planar surface of the first portion and a curved surface of the second portion; and
wherein, in a cross-section extending through the receptacle and the mounting plate, the planar surface and the curved surface are at an angle between 35° and 85°, inclusive, with respect to each other.

2. The mounting bracket assembly for the aftertreatment system, the mounting bracket assembly comprising:
the outer bracket as claimed in claim 1; and
a first inner bracket, comprising:
a first flange, the first flange comprising a first flange surface in confronting relation with a mounting plate surface and disposed along a first plane, and
a first flange protrusion, extending from the first flange, the first flange protrusion comprising:
a first flange protrusion first surface in confronting relation with the planar surface of the first portion and disposed along a second plane, and
a first flange protrusion second surface in confronting relation with the curved surface of the second portion and disposed along a third plane.
wherein the first inner bracket is at least partially disposed between the first mounting post and the second mounting post.

3. The mounting bracket assembly as claimed in claim 2, further comprising:
a clamping plate coupled to the first inner bracket;
a first mounting bracket body mount extending from the first inner bracket and coupled to the first inner bracket by a connector; and
a fastener coupled to the clamping plate and the outer bracket.

4. The mounting bracket assembly as claimed in claim 3, wherein the first flange has a first flange segment and a second flange segment, and the first flange segment and the second flange segment are separated by the connector.

5. The mounting bracket assembly as claimed in claim 3 or 4, further comprising:
a second mounting bracket body mount;
wherein the second mounting bracket body mount extends from a second inner bracket and is coupled to the outer bracket.

6. The mounting bracket assembly as claimed in claim 5, the second inner bracket comprising:
a second flange, the second flange comprising a second flange surface in confronting relation with the mounting plate surface and disposed along the first plane, and
a second flange protrusion, extending from the second flange, the second flange protrusion comprising:
a second flange protrusion first surface in confronting relation with a second planar surface of the first portion and disposed along the second plane, and
a second flange protrusion second surface in confronting relation with a second curved surface of the second portion and disposed along the third plane.

7. The mounting bracket assembly as claimed in claim 6, further comprising:
a third mounting post located at a third location of the mounting plate and having a third post first aperture extending in a third direction that is parallel to the first direction;
wherein the second inner bracket is at least partially disposed between the second mounting post and the third mounting post.

8. The outer bracket as claimed in claim 7, wherein:
the first post first aperture has a first post back and a first post back width;
the second post first aperture has a second post back and a second post back width;
the third post first aperture has a third post back and a third post back width; and
the third post back width is more than the first post back width and the second post back width.

9. The mounting bracket assembly as claimed in any one of claims 3 to 8, wherein:
the clamping plate is disposed on an angled surface of the first flange;
the clamping plate further comprises a clamping plate aperture; and
the fastener is disposed within the clamping plate aperture.

10. The mounting bracket assembly as claimed in any one of claims 2 to 9, wherein:
a horizontal flange is disposed on a top surface of the first flange; and
the horizontal flange further comprises a first aperture.

11. The mounting bracket assembly as claimed in claim 10, wherein a portion of the mounting plate is arranged in the first aperture of the horizontal flange.

12. The outer bracket as claimed in any preceding claim, wherein a portion of the brace in contact with the mounting plate is curved.

13. The mounting bracket assembly as claimed in any preceding claim, wherein in the cross-section extending through the receptacle and the mounting plate, the planar surface and the curved surface are at an angle between 45° and 75°, inclusive, with respect to each other.

14. The mounting bracket assembly as claimed in claim 1, further comprising:
a first inner bracket;
a first mounting tab extending from a surface of the mounting plate at a first tab location, the first mounting tab having a first tab aperture; and
a second mounting tab extending from the surface of the mounting plate at a second tab location, the second mounting tab having a second tab aperture, wherein:
a surface of the first mounting tab at least partially faces a surface of the second mounting tab; and
the outer bracket further comprises a first protrusion extending from the surface of the mounting plate, wherein at least a portion of the first protrusion is located between a plane in which the surface of the first mounting tab extends and a plane in which the surface of the second mounting tab extends, the first protrusion having a surface that contacts the first inner bracket.

15. A mounting bracket assembly for an aftertreatment system, the mounting bracket assembly comprising:
a first inner bracket; and
an outer bracket comprising:
a mounting plate,
a first mounting post located at a first location of the mounting plate and having a first post first aperture extending in a first direction,
a second mounting post located at a second location of the mounting plate and having a second post first aperture extending in a second direction that is parallel to the first direction,
a first mounting tab extending from a surface of the mounting plate at a third location, the first mounting tab having a first tab aperture,
a second mounting tab extending from the surface of the mounting plate at a second tab location, the second mounting tab having a second tab aperture, wherein:
a surface of the first mounting tab at least partially faces a surface of the second mounting tab, and
the outer bracket further comprises a first protrusion extending from the surface of the mounting plate, wherein at least a portion of the first protrusion is located between a plane in which the surface of the first mounting tab extends and a plane in which the surface of the second mounting tab extends, the first protrusion having a surface that contacts the first inner bracket.

16. The mounting bracket assembly as claimed in claim 15, further comprising:
a second inner bracket,
a third mounting tab extending from the surface of the mounting plate at a third tab location, the third mounting tab having a third tab aperture,
a fourth mounting tab extending from the surface of the mounting plate at a fourth tab location, the fourth mounting tab having a fourth tab aperture, wherein:
a surface of the third mounting tab at least partially faces a surface of the fourth mounting tab, and
a second protrusion extending from the surface of the mounting plate, wherein at least a portion of the second protrusion is located between the plane in which the surface of the third mounting tab extends and the plane in which the surface of the fourth mounting tab extends, the second protrusion having a surface that contacts the second inner bracket.
